(19) Europäisches Patentamt
European Patent Office
Office européen des brevets

(11) **EP 1 842 663 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(51) Int Cl.:
***B32B 27/20*** *(2006.01)*     ***B32B 27/36*** *(2006.01)*
*B65D 65/40* *(2006.01)*     *G09F 3/00* *(2006.01)*
*G03C 1/795* *(2006.01)*

(21) Anmeldenummer: **07006481.1**

(22) Anmeldetag: **29.03.2007**

(54) **Mehrschichtige, weisse Polyesterfolie**

White multilayer film

Film multicouche blanc

(84) Benannte Vertragsstaaten:
**BE DE FR GB IT LU TR**

(30) Priorität: **05.04.2006 DE 102006015941**

(43) Veröffentlichungstag der Anmeldung:
**10.10.2007 Patentblatt 2007/41**

(73) Patentinhaber: **Mitsubishi Polyester Film GmbH**
**65203 Wiesbaden (DE)**

(72) Erfinder:
• **Jesberger, Martin, Dr.**
**55122 Mainz (DE)**

• **Pfeiffer, Herbert, Dr. Professor**
**55126 Mainz (DE)**
• **Bröder, Dirk, Dr.**
**55444 Schweppenhausen (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**WO-A-01/60140     DE-A1- 10 026 166**

**Beschreibung**

Die Erfindung betrifft eine mehrschichtige, weiße, biaxial orientierte Polyesterfolie umfassend eine Basisschicht (B), welche einen thermoplastischen Polyester und als alleiniges Weißpigment Bariumsulfat enthält, sowie mindestens eine Deckschicht (A). Die Deckschicht (A) enthält neben dem alleinigen Weißpigment Bariumsulfat zusätzlich ein Antiblockmittel. Die Erfindung betrifft weiterhin ein Verfahren für die Herstellung der Folie und ihre Verwendung.

Weiße, biaxial orientierte Polyesterfolien sind nach dem Stand der Technik bekannt.

Die DE 26 47 713 C2 beschreibt einen photographischen, biaxial orientierten opaken Schichtenträger, der aus einem linearen Polyester besteht und als alleiniges teilchenförmiges Pigment Bariumsulfat in einer Menge von 5 bis 50 Gew.-% enthält. Die Bariumsulfatteilchen haben eine durchschnittliche Korngröße von 0,5 bis 10 $\mu$m. Der photographische, biaxial orientierte, opake Schichtenträger zeichnet sich durch einen besonders hohen Weißgrad und durch eine besonders hohe Opazität aus, ohne dass der Schichtenträger durch in ihm enthaltene Zusatzstoffe während der Herstellung verfärbt wird. Außerdem weist er eine geringe Dichte, einen guten Spiegelglanz und eine geringe Gesamtlichtdurchlässigkeit auf. Die Folie hat jedoch noch Defizite bei ihrer Herstellung (keine optimale Rollenaufmachung) und in den optischen Eigenschaften.

Die EP-A-1 125 966 beschreibt eine weiß-opake Folie mit einer Dicke im Bereich von 10 bis 500 $\mu$m, die als Hauptbestandteil einen kristallisierbaren Thermoplasten enthält und dadurch gekennzeichnet ist, dass die Folie mindestens Bariumsulfat als Weißpigment, mindestens einen UV-Stabilisator als Lichtschutzmittel, mindestens ein Flammschutzmittel und mindestens einen optischen Aufheller enthält. Der Anteil Bariumsulfat in der Folie liegt in einem Bereich von 0,2 bis 40 Gew.-%, der UV-Stabilisator als Lichtschutzmittel in einem Bereich von 0,01 bis 5 Gew.-%, das Flammschutzmittel in einem Bereich von 0,5 bis 30,0 Gew.-% und der optische Aufheller in einem Bereich von 10 bis 50.000 ppm, bezogen auf das Gewicht des Thermoplasten. Durch die vielfältige Eigenschaftskombination eignet sich die Folie für verschiedene Anwendungen, beispielsweise für Innenraumverkleidungen, für den Messebau und Messeartikel, für Displays und für Schilder, für Etiketten, für Schutzverglasungen von Maschinen und Fahrzeugen, im Laden- und Regalbau, als Werbeartikel, Kaschiermedium und in Lebensmittelanwendungen. Die Folie hat jedoch noch Defizite bei ihrer Herstellung (keine optimale Rollenaufmachung) und in den optischen Eigenschaften.

Die EP-A-1 125 967 betrifft eine weiß-opake Folie mit niedriger Transparenz aus einem kristallisierbaren Thermoplasten, deren Dicke im Bereich von 10 bis 500 $\mu$m liegt. Die Folie enthält mindestens Bariumsulfat als Weißpigment sowie einen optischen Aufheller und zeichnet sich durch eine gute Verstreckbarkeit, durch eine niedrige Transparenz sowie durch sehr gute optische und mechanische Eigenschaften aus. Das Bariumsulfat und/oder der optische Aufheller werden entweder direkt beim Rohstoffhersteller in den Thermoplasten eingearbeitet oder als Masterbatch bei der Folienherstellung zudosiert. Die Folie ist aufgrund ihrer Eigenschaftskombination für vergleichbare Anwendungen, wie zuvor für EP-A-1 125 966 beschrieben, geeignet. Die Folie hat jedoch Defizite bei ihrer Herstellung (keine optimale Rollenaufmachung) und in den optischen Eigenschaften.

Aufgabe der vorliegenden Erfindung war es daher, eine weiße, biaxial orientierte Polyesterfolie bereitzustellen, die sich gegenüber den im Stand der Technik bekannten Polyesterfolien durch verbesserte Eigenschaften, insbesondere durch

eine verbesserte Herstellbarkeit (d. h. durch eine verbesserte Wickelung),
ein verbessertes Verarbeitungsverhalten und
verbesserte optische Eigenschaften (Glanz, Erscheinungsbild),
auszeichnet.

Die Aufgabe wird erfindungsgemäß durch die Bereitstellung einer weißen, coextrudierten, biaxial orientierten Polyesterfolie mit einer Basisschicht (B) und mindestens einer Deckschicht (A) gelöst, wobei

a) die Basisschicht (B) als alleiniges weißfärbendes Pigment Bariumsulfat in einer Konzentration von 5 bis 25 Gew.-% (bezogen auf das Gewicht der Basisschicht (B)) und
b) die Deckschicht (A) als alleiniges weißfärbendes Pigment Bariumsulfat in einer Konzentration von 5 bis 25 Gew.-% enthält und zusätzlich 0,01 bis 4 Gew.-% eines Antiblockmittels mit einem mittleren Durchmesser ($d_{50}$-Wert) von 2 bis 8 $\mu$m enthält (Gew.-%- Angaben bezogen auf das Gewicht der Deckschicht (A)).

Die weiße, biaxial orientierte Folie gemäß der vorliegenden Erfindung ist zumindest zweischichtig aufgebaut. Sie besteht dann aus der Basisschicht (B) und der auf dieser durch Coextrusion aufgebrachten Deckschicht (A), wobei beide Schichten als alleiniges weißfärbendes Pigment Bariumsulfat enthalten und die Deckschicht (A) ein zusätzliches, für die Herstellung der Folie (Wickelung) und die Verbesserung der optischen Eigenschaften förderliches Antiblockmittel enthält.

In der bevorzugten Ausführungsform ist die Folie drei - oder mehr als dreischichtig, beispielsweise vier- oder fünfschichtig, aufgebaut.

Im Falle der bevorzugten dreischichtigen Ausführungsform besteht die Folie aus der Basisschicht (B), der Deckschicht (A) und einer der Deckschicht (A) gegenüberliegenden Deckschicht (C) - Schichtaufbau ABC. Besonders bevorzugt ist hierbei der symmetrische dreischichtige Aufbau (ABA), bei dem die Schichten (A) und (C) als gleich anzusehen sind. Dieser Folienaufbau bringt hinsichtlich einer einwandfreien Verarbeitung der Folie die besten Voraussetzungen mit sich. So besitzen beispielsweise unsymmetrische Folienaufbauten wie beispielsweise (ABC) oder insbesondere der (AB)-Aufbau eine bestimmte Rollneigung (engl. Curling), was unerwünscht ist.

Es wurde gefunden, dass bei der alleinigen Verwendung von Bariumsulfat als einfärbendem Pigment (Weißpigment) die Folie sich durch einen besonders hohen Weißgrad und durch eine besonders hohe Opazität auszeichnet und darüber hinaus weniger anfällig gegenüber Einreißen und Delaminierung wird. Die Zugabe des Bariumsulfats erfolgt bevorzugt bei der Rohstoffherstellung, wobei die Bariumsulfatteilchen üblicherweise zu dem Glykol hinzugegeben werden, aus dem der Polyester hergestellt wird. Die Zugabe der Bariumsulfatteilchen über die Masterbatchtechnologie (z. B. bei der Extrusion) ist prinzipiell ebenfalls möglich, hat aber den Nachteil, dass die Folie sich dann im Gelbgrad verschlechtern kann.

Basisschicht (B)

Die Basisschicht (B) der Folie besteht bevorzugt zu mindestens 80 Gew.-%, insbesondere zu mindestens 85 Gew.-% und besonders bevorzugt zu mindestens 90 Gew.-% aus einem thermoplastischen Polyester. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis- hydroxymethyl-cyclohexan und Terephthalsäure [= Poly(1,4-cyclohexandimethylenterephthalat, PCDT)] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen dann aus anderen aliphatischen, cycloaliphatischen oder aromatischen Diolen bzw. anderen Dicarbonsäuren. Bevorzugt besteht die Basisschicht aus Polyethylenterephthalat. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol), oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkananteil geradkettig oder verzweigt sein kann.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Deckschicht (A)

Für die Deckschicht (A), für eine eventuell vorhandene weitere Deckschicht (C) und für eventuell vorhandene Zwischenschichten (D) und (E) werden bevorzugt die gleichen Polymere verwendet, wie sie zuvor für die Basisschicht (B) angegeben wurden. Besonders bevorzugt enthalten die Basisschicht und die weiteren Schichten identische Polymere (Polyester).

Weißpigment

Zur Erzielung der vorgenannten Eigenschaften, insbesondere des gewünschten Weißgrades und der gewünschten Opazität der Folie, wird in die Basisschicht (B) und zumindest in eine Deckschicht (A), eventuell aber auch in vorhandene andere Schichten, das notwendige Weißpigment eingearbeitet. Die Folie enthält erfindungsgemäß als alleiniges Weißpigment Bariumsulfat, wobei die Menge an Bariumsulfat vorzugsweise im Bereich zwischen 5 und 25 Gew.-%, bezogen auf das Gewicht der das Bariumsulfat enthaltenden Schichten, liegt. Vorzugsweise wird das Bariumsulfat bei der Rohstoffherstellung zudosiert, wobei die Bariumsulfatteilchen üblicherweise zu dem Glykol hinzugegeben werden, aus dem der Polyester hergestellt wird.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 36-31 (1974) beschrieben sind, hergestellt werden.

Um zu dem gewünschten Weißgrad (bevorzugt > 70) und zu der gewünschten niedrigen Transparenz (bevorzugt < 40 %) der Folie zu gelangen, ist die Basisschicht (B) erfindungsgemäß hochgefüllt. Die Menge an Bariumsulfat zur Erzielung der gewünschten niedrigen Transparenz beträgt erfindungsgemäß 5 bis 25 Gew.-%, bevorzugt 10 bis 25 Gew.-% und besonders bevorzugt 15 bis 25 Gew.-%, bezogen auf das Gesamtgewicht dieser Schicht.

Die mittlere Teilchengröße ($d_{50}$-Wert) des Bariumsulfats liegt vorzugsweise im Bereich von 0,1 bis 5 $\mu$m, besonders bevorzugt im Bereich von 0,2 bis 3,0 $\mu$m.

Zu einer weiteren Steigerung des Weißgrades können in einer besonderen Ausführungsform geeignete optische Aufheller der Basisschicht und/oder den anderen Schichten zugesetzt werden. Geeignete optische Aufheller sind beispielsweise Hostalux® KS der Firma Clariant oder Eastobrite® OB-1 der Firma Eastman.

Erfindungsgemäß enthält die Deckschicht (A), gegebenenfalls auch die weitere Deckschicht (C) und gegebenenfalls weitere Zwischenschichten (D) und (E), als alleiniges Weißpigment Bariumsulfat von bevorzugt 5 bis 25 Gew.-%. Die Konzentration des Weißpigmentes wird dabei bevorzugt so gewählt, dass der Weißgrad (nach Berger) der Folie bevorzugt größer als 70 ist. Im anderen Fall ist die Folie für die bevorzugte Anwendung (z. B. photographischer Schichtträger, Rundumetikett, medizinische Anwendung) von den optischen Eigenschaften her weniger geeignet, da sie zu durchscheinend sein kann.

Enthält die Deckschicht (A) das weißfärbende Pigment in einer Konzentration von kleiner als 4 Gew.-%, so geht der brillante weiße Charakter der Folie verloren, und der nachfolgend aufgebrachte Druck auf dieser Seite erscheint dem Betrachter fehlerhaft. Enthält die Deckschicht (A) das weißfärbende Pigment in einer Konzentration von größer als 25 Gew.-%, so ist die Gefahr groß, dass das Weißpigment auskreidet.

Bezüglich Konzentrationsbereichen, Qualität und Teilchengröße des Bariumsulfats gelten die für die Basisschicht gemachten Angaben.

Es wurde gefunden, dass die Wickelbarkeit der Folie und die Rollenaufmachung deutlich verbessert werden können, wenn die Deckschicht (A) und gegebenenfalls auch die weitere Deckschicht (C) zusätzlich ein Antiblockmittel enthält. Dabei wurde festgestellt, dass insbesondere der mittlere Partikeldurchmesser ($d_{50}$) und die Konzentration des zusätzlich verwendeten Antiblockmittels in der Deckschicht (A) und evtl. (C) für eine gute Wickelbarkeit und für eine gute Verarbeitbarkeit der Folie von Bedeutung sind.

Zur Verbesserung der Wickelung und Verarbeitbarkeit der Folie enthält zumindest die Deckschicht (A) neben dem Weißpigment ein Antiblockmittel, bei dem der mittlere Durchmesser ($d_{50}$-Wert) im Bereich von 2 bis 8 $\mu$m liegt.

In der bevorzugten Ausführungsform enthält die Deckschicht (A) ein Antiblockmittel, bei dem der mittlere Durchmesser im Bereich von 2,1 bis 7,0 $\mu$m liegt, und in der besonders bevorzugten Ausführungsform enthält die Deckschicht (A) ein Antiblockmittel, bei dem der mittlere Durchmesser im Bereich von 2,2 bis 6 $\mu$m liegt.

Enthält die Deckschicht (A) dagegen ein Antiblockmittel, bei dem der mittlere Durchmesser außerhalb des erfindungsgemäßen Bereiches liegt, so wirkt sich dies negativ auf die Wickelung, die Verarbeitbarkeit und auf die optischen Eigenschaften der Folie aus.

Enthält die Deckschicht (A) ein Antiblockmittel, bei dem der mittlere Durchmesser größer als 8 $\mu$m ist, so werden die optischen Eigenschaften und die Wickelung der Folie schlechter.

Enthält die Deckschicht (A) der Folie dagegen ein Antiblockmittel, bei dem der mittlere Durchmesser kleiner als 2 $\mu$m ist, so wird die Wickelung der Folie und damit die Rollenaufmachung schlechter.

Die Deckschicht (A) und gegebenenfalls auch die weitere Deckschicht (C) werden zur Verbesserung des Wickelverhaltens und der Verarbeitbarkeit mit dem Antiblockmittel ausgerüstet. Die Konzentration der Antiblockmittel in der Deckschicht (A) und gegebenenfalls auch in der weiteren Deckschicht (C) liegt in der bevorzugten Ausführungsform zwischen 0,05 und 3,5 Gew.-% und in der besonders bevorzugten Ausführungsform zwischen 0, 1 und 3,0 Gew.-% und richtet sich im Wesentlichen nach den zu erzielenden optischen Eigenschaften und der zu erzielenden Wickelbarkeit der Folie.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, calcinierter Ton, Lithiumfluorid, Calcium-, Barium-, Zink- oder Mangan-Salze der eingesetzten Dicarbonsäuren, Kaolin oder vernetzte Polystyrol- oder Acrylat-Partikel.

Als Antiblockmittel können auch Mischungen von zwei oder mehr verschiedenen Antiblockmitteln oder Mischungen von Antiblockmitteln gleicher Zusammensetzung, aber unterschiedlicher Partikelgröße gewählt werden, wenn für die Mischungen die oben angegebenen Bedingungen bezüglich Gesamtmenge und mittlerem Teilchendurchmesser erfüllt sind. Die Antiblockmittel können den einzelnen Schichten in den jeweils vorteilhaften Konzentrationen, z. B. als glykolische Dispersion während der Polykondensation oder über Masterbatche bei der Extrusion, zugegeben werden.

Die Zugabe von Antiblockmittel in der erfindungsgemäßen Konzentration zumindest in die Deckschicht (A) hat daneben den gewünschten positiven Effekt auf die Rauigkeit und den Reibungskoeffizienten der Deckschicht (A). Um das Verarbeitungsverhalten der Folie weiterhin zu verbessern, sollte in einem günstigen Fall die Konzentration des Antiblockmittels so gewählt werden, dass für die Rauigkeit und für den Reibungskoeffizienten folgende Werte erzielt werden:

Der Reibungskoeffizient (COF) der Seite (A) gegen sich selbst sollte bevorzugt kleiner/gleich 0,4 sein. Andernfalls sind das Wickelverhalten und die Weiterverarbeitung der Folie unbefriedigend.

Die Rauigkeit der Deckschicht (A), ausgedrückt als ihr $R_a$-Wert, sollte bevorzugt zwischen 40 und 150 nm liegen. Kleinere $R_a$-Werte als 40 nm haben negative Auswirkungen auf das Wickel- und Verarbeitungsverhalten der Folie, größere $R_a$-Werte als 150 nm beeinträchtigen die optischen Eigenschaften (Glanz) der Folie.

Besonders bevorzugt enthalten die Basisschicht und die Deckschichten A und C als alleiniges weißfärbendes Pigment Bariumsulfat, dessen Konzentration in allen Schichten identisch ist. Als Antiblockmittel in den Deckschichten wird bevorzugt ebenfalls jeweils ein identisches Pigment, insbesondere Siliciumdioxid, verwendet.

Bei der Folie liegt die Dicke der Deckschicht (A) und/oder (C) im Allgemeinen im Bereich von 0,4 $\mu$m bis 6 $\mu$m, bevorzugt im Bereich von 0,5 bis 5 $\mu$m und besonders bevorzugt im Bereich von 0,6 bis 4 $\mu$m.

Die Basisschicht (B) als auch die weiteren Schichten, z. B. (A) und (C), können zusätzlich übliche Additive wie z. B. Stabilisatoren enthalten. Sie werden üblicherweise dem Polymer oder der Polymermischung vor dem Aufschmelzen zugesetzt. Als Stabilisatoren werden beispielsweise Phosphorverbindungen wie Phosphorsäure oder Phosphorsäureester eingesetzt.

Die Dicke der Polyesterfolie nach der vorliegenden Erfindung kann innerhalb weiter Grenzen variieren. Sie beträgt bevorzugt 5 bis 500 $\mu$m, insbesondere 8 bis 400 $\mu$m und besonders bevorzugt 10 bis 300 $\mu$m, wobei die Basisschicht einen Anteil von bevorzugt 50 bis 95 % an der Gesamtdicke hat.

Herstellungsverfahren

Gegenstand der vorliegenden Erfindung ist auch ein Verfahren zur Herstellung der erfindungsmäßen Folien. Es umfasst das Herstellen einer mehrschichtigen Folie aus einer Basisschicht (B) und z. B. Deckschichten (A) und (C) durch Coextrusion und Ausformen der Schmelzen zu einem flachen Schmelzefilm, biaxiales Strecken der Folie und Thermofixieren der gestreckten Folie.

Zunächst wird das Polymer bzw. die Polymermischung der einzelnen Schichten in jeweils einem Extruder komprimiert und verflüssigt. Die Schmelzen werden gleichzeitig übereinander durch eine Breitschlitzdüse gepresst, und die ausgepresste mehrschichtige Folie wird auf einer oder mehreren Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe von zwei entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die biaxiale Verstreckung, insbesondere von PET, im Allgemeinen durchgeführt werden kann, kann in einem relativ großen Bereich variieren und richtet sich nach den gewünschten Eigenschaften der Folie. Die Längsstreckung wird im Allgemeinen bei ca. 70 bis 140 °C und die Querstreckung bei ca. 80 bis 150 °C durchgeführt. Das Längsstreckverhältnis $\lambda_{MD}$ liegt bevorzugt im Bereich von 2:1 1 bis 5:1. Das Querstreckverhältnis $\lambda_{TD}$ liegt im Allgemeinen im Bereich von 2,5:1 bis 5:1. Vor der Querstreckung kann man eine oder beide Oberflächen der Folie nach den bekannten Verfahren in-line beschichten. Die In-line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Bevorzugt werden nach der biaxialen Streckung eine oder beide Oberflächen der Folie nach einer der bekannten Methoden zusätzlich corona- oder flammbehandelt. Die Behandlungsintensität liegt im Allgemeinen über 50 mN/m$^2$.

Die erfindungsgemäße Folie zeigt ein sehr gutes Handling, sehr gute Wickeleigenschaften und ein sehr gutes Verarbeitungsverhalten. Die erfindungsgemäße Folie eignet sich als Verpackungsmaterial für Nahrungs- und Genussmittel, als photographischer Schichtträger, als Rundumetikett oder für die medizinische Anwendung.

Die Folie nach der vorliegenden Erfindung weist daneben hervorragende optische Eigenschaften auf, zeigt hervorragende Weiterverarbeitungseigenschaften und eine ausgezeichnete Rollenaufmachung. Die Folie eignet sich aufgrund ihres sehr guten Handlings und ihrer sehr guten Verarbeitungseigenschaften insbesondere für die Verarbeitung auf schnelllaufenden Maschinen. Außerdem besitzt die Folie einen hervorragenden Weißgrad, der der Folie zusätzlich ein sehr attraktives, werbewirksames Aussehen verleiht.

Bei der Herstellung der Folie ist gewährgeleistet, dass das Regenerat, das z. B. als Verschnitt bei der Folienherstellung anfällt, in einer Konzentration von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die nachstehende Tabelle (Tabelle 1) fasst die wichtigsten bevorzugten Folieneigenschaften noch einmal zusammen.

**Tabelle 1**

| | Bevorzugt | Besonders bevorzugt | Ganz besonders bevorzugt | Einheit | Messmethode |
|---|---|---|---|---|---|
| | | | | | |
| **Basisschicht B** | | | | | |
| Konzentration an Bariumsulfat (Weißpigment) | 5 bis 25 | 10 bis 25 | 15 bis 25 | Gew.-% | |
| | | | | | |
| **Deckschicht A** | | | | | |
| Konzentration an Bariumsulfat (Weißpigment) | 5 bis 25 | 10 bis 25 | 15 bis 25 | Gew.-% | |
| Konzentration des Antiblockmittels | 0,01 bis 4 | 0,05 bis 3,5 | 0,1 bis 3 | Gew.-% | |
| Partikeldurchmesser ($d_{50}$) des Antiblockmittels | 2 bis 8 | 2,1 bis 7 | 2,2 bis 6 | $\mu$m | |
| Mittlere Rauigkeit $R_a$ der A-Seite | 40 bis 150 | 43 bis 140 | 46 bis 130 | nm | DIN4762 |
| Reibungswert COF A-Seite gegen A-Seite | kleiner/gleich 0,40 | kleiner/gleich 0,35 | kleiner/gleich 0,30 | | DIN53375 |
| Dicke der Deckschicht A | 0,4 bis 6 | 0,5 bis 5 | 0,6 bis 4 | $\mu$m | |
| | | | | | |
| **Eigenschaften der Folie** | | | | | |
| Dicke der Folie | 5 bis 500 | 8 bis 400 | 10 bis 300 | $\mu$m | |
| Weißgrad der Folie nach Berger | > 70 | > 85 | > 100 | | |
| Transparenz der Folie | < 40 | < 35 | < 30 | % | ASTM-D 1003-00 |
| Glanz der Deckschicht A bei 20°-Messwinkel | < 40 | < 35 | < 30 | | DIN 67530 |

Zur Charakterisierung der Rohstoffe und der Folien werden die folgenden Messmethoden benutzt:

DIN =     Deutsches Institut für Normung

ASTM=    American Society for Testing and Materials

Transparenz

Die Transparenz wird in Anlehnung an ASTM-D 1003-00 gemessen.

Rauigkeit

Der arithmetische Mittenrauwert $R_a$ wird nach DIN 4762 bestimmt.

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989) beschrieben.

SV-Wert (Standard Viskosität)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität:

$$IV\ [\eta] = 6{,}907 \cdot 10^{-4}\ SV\ (DCE) + 0{,}063096\ [dl/g]$$

Reibung

Die Reibung wird nach DIN 53375 bestimmt. Die Gleitreibungszahl wird 14 Tage nach der Produktion gemessen.

Glanz

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektrischen Empfänger auffallenden Lichtstrahlen werden als proportionale elektrische Größe angezeigt. Der Messwert ist dimensionslos.

Messung des mittleren Durchmessers $d_{50}$

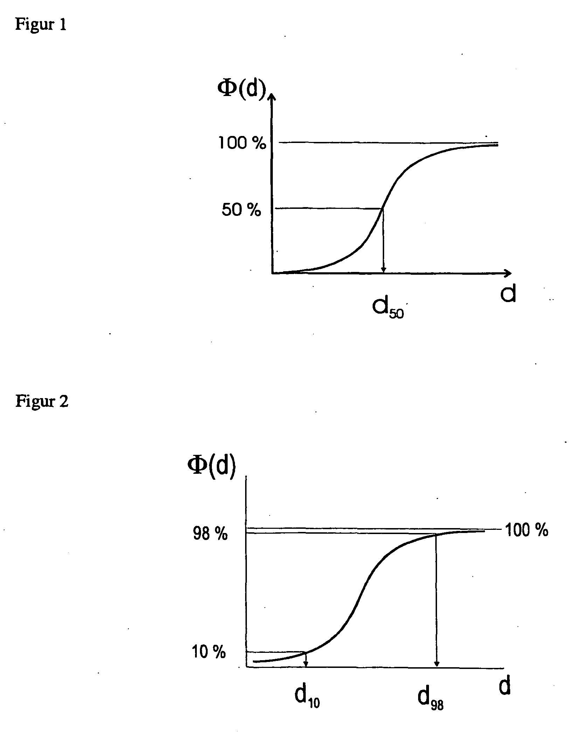

Die Bestimmung des mittleren Durchmessers $d_{50}$ wird mittels Laser auf einem Malvern Master Sizer (Fa. Malvern Instruments, Ltd., GB) nach der Standardmethode durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes (siehe Figur 1). Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschten $d_{50}$-Wert. Wie dies zu verstehen ist wird in Figur 1 näher verdeutlicht.

Wickelverhalten der Folie

Das Wickelverhalten der Folie wird visuell beim Aufwickeln der Maschinenrolle direkt nach der biaxialen Orientierung beurteilt.

+: Die Maschinenrolle ist einwandfrei gewickelt. Es wurden keine Falten, kein Verschießen der Folienbahn und keine Blockpickel infolge von Verblockung von Folienlagen festgestellt.

-: Die Maschinenrolle ist fehlerbehaftet gewickelt. Es wurde mindestens einer der folgenden Fehler beobachtet: Falten, Verschießen der Folienbahn, Blockpickel infolge von Verblockung von Folienlagen.

Rollenaufmachung

Die Rollenaufmachung wird visuell nach der Konfektionierung der Maschinerolle zu schmäleren Kundenrollen beurteilt.

+: Die Kundenrolle ist einwandfrei gewickelt. Es wurden keine Falten, keine Rillen in der Folienbahn und keine Blockpickel infolge von Verblockung von Folienlagen festgestellt.

-: Die Kundenrolle ist fehlerbehaftet gewickelt. Es wurde mindestens einer der folgenden Fehler beobachtet: Falten, Rillen in der Folienbahn, Blockpickel infolge von Verblockung von Folienlagen.

Verarbeitungsverhalten der Folie

Das Verarbeitungsverhalten der Folie wird visuell bei der Herstellung von Deckeln (Deckelfolien) beurteilt.

+: Das Verarbeitungsverhalten der Folie ist einwandfrei. Es wurde z.B. kein Curling, kein Hängenbleiben des Deckels im Siegelwerkzeug etc. festgestellt.

-: Das Verarbeitungsverhalten der Folie ist fehlerbehaftet. Es wurde mindestens einer der folgenden Fehler beobachtet: Curling, Hängenbleiben des Deckels im Siegelwerkzeug.

Beispiel 1

Chips aus Polyethylenterephthalat enthaltend Bariumsulfat als Weißpigment wurden getrocknet und dem Extruder für die Basisschicht (B) zugeführt. Ebenfalls wurden Chips aus Polyethylenterephthalat enthaltend Bariumsulfat als Weißpigment und ein Antiblockmittel getrocknet und dem Extruder für die beiden (gleichen) Deckschichten (A) zugeführt.

Dann wurde durch Coextrusion und anschließende stufenweise Orientierung in Längs- und Querrichtung eine weiße, dreischichtige Folie mit ABA-Aufbau und einer Gesamtdicke von 60 $\mu$m hergestellt. Die Dicke der beiden Deckschichten betrug jeweils 2 $\mu$m.

Basisschicht (B):

100 Gew.-%   Polyethylenterephthalat mit 20 Gew.-% Bariumsulfat (Blanc fixe XR-HX, Sachtleben Chemie) als Weißpigment und einem SV-Wert von 800

Deckschicht (A), Mischung aus:

85 Gew.-%   Polyethylenterephthalat mit 20 Gew.-% Bariumsulfat (Blanc fixe XR-HX, Sachtleben Chemie) als Weißpigment und einem SV-Wert von 800

15 Gew.-%   Masterbatch aus 97,5 Gew.-% Polyethylenterephthalat (SV-Wert von 800) und 2,5 Gew.-% Sylobloc® 44 H (synthetisches $SiO_2$ der Fa. Grace, Durchmesser = 2,5 $\mu$m)

Die Herstellungsbedingungen in den einzelnen Verfahrensschritten waren:

| Extrusion | Temperaturen | A-Schicht: | 280 | °C |
|---|---|---|---|---|
| | | B-Schicht: | 280 | °C |
| | | A-Schicht: | 280 | °C |
| | Temperatur der Abzugswalze | | 20 | °C |
| Längsstreckung | Temperatur | | 70-120 | °C |
| | Längsstreckverhältnis | | 3,2 | |

(fortgesetzt)

| Querstreckung | Temperatur | 80-135 | °C |
|---|---|---|---|
| | Querstreckverhältnis | 3,8 | |
| Fixierung | Temperatur | 230 | °C |
| | Dauer | 3 | s |

Es wurde eine Folie mit einer sehr guten Optik, mit sehr gutem Wickelverhalten, einer sehr guten Wickelqualität und einem sehr guten Verarbeitungsverhalten erhalten.

Beispiel 2

Im Vergleich zu Beispiel 1 wurde jetzt nur die Zusammensetzung der Deckschichten (A) geändert. Alle anderen Parametern wurden beibehalten.

Deckschicht (A), Mischung aus:

88 Gew.-%    Polyethylenterephthalat mit 20 Gew.-% Bariumsulfat (Blanc fixe XR-HX, Sachtleben Chemie) als Weißpigment und einem SV-Wert von 800

12 Gew.-%    Masterbatch aus 97,5 Gew.-% Polyethylenterephthalat (SV-Wert von 800) und 2,5 Gew.-% Sylobloc 44 H (synthetisches $SiO_2$ der Fa. Grace, Durchmesser = 2,5 $\mu$m)

Vergleichsbeispiel 1

Im Vergleich zu Beispiel 1 wurde jetzt nur die Zusammensetzung der Deckschichten (A) geändert. Es wurde das Antiblockmittel in den Deckschichten weggelassen. Alle anderen Parametern wurden beibehalten.

Deckschicht (A), Mischung aus:

100 Gew.-%    Polyethylenterephthalat mit 20 Gew.-% Bariumsulfat (Blanc fixe XR-HX, Sachtleben Chemie) als Weißpigment und einem SV-Wert von 800

Die Ergebnisse der Beispiele / Vergleichsbeispiele sind in Tabelle 2 zusammengefasst.

**Tabelle 2**

| | Weißgrad der Folie | Transparenz [%] | Glanz Messwinkel bei 20° | | Mittlere Rauigkeit $R_a$ der A-Seite [nm] | Reibungswert COF A-Seite gegen A-Seite | Wickelverhalten | Rollenaufmachung | Verarbeitungsverhalten |
| | | | A-Seite | C-Seite | | | | | |
|---|---|---|---|---|---|---|---|---|---|
| **Beispiel** | | | | | | | | | |
| 1 | 110 | 25 | 18 | 18 | 56 | 0,30 | + | + | + |
| 2 | 111 | 26 | 20 | 20 | 50 | 0,29 | + | + | + |
| **V-Beispiel** | | | | | | | | | |
| 1 | 112 | 23 | 40 | 40 | 34 | 0,42 | - | - | - |

**Patentansprüche**

1. Weiße, biaxial orientierte Polyesterfolie, welche eine Basisschicht (B) und mindestens eine Deckschicht (A) aufweist, wobei

   a) die Basisschicht (B) als alleiniges weißfärbendes Pigment Bariumsulfat in einer Konzentration von 5 bis 25 Gew.-% enthält und

   b) die Deckschicht (A) als alleiniges weißfärbendes Pigment Bariumsulfat in einer Konzentration von 5 bis 25 Gew.-% und zusätzlich 0,01 bis 4 Gew.-% eines Antiblockmittels mit einem mittleren Durchmesser ($d_{50}$-Wert) von 2 bis 8 $\mu$m enthält.

2. Polyesterfolie nach Anspruch 1, **dadurch gekennzeichnet, dass** das weißfärbende Pigment ein gefälltes Bariumsulfat ist.

3. Polyesterfolie nach Anspruch 1 oder 2, **dadurch gekennzeichnet, dass** das weißfärbende Pigment in der Basisschicht (B) und in der Deckschicht (A) gefälltes Bariumsulfat ist.

4. Polyesterfolie nach einem oder mehreren der Ansprüche 1 bis 3, **dadurch gekennzeichnet, dass** das Antiblockmittel Siliciumdioxid ist.

5. Polyesterfolie nach einem oder mehreren der Ansprüche 1 bis 4, **dadurch gekennzeichnet, dass** die Basisschicht (B) zu mindestens 80 Gew.-% aus einem thermoplastischen Polyester besteht.

6. Polyesterfolie nach einem oder mehreren der Ansprüche 1 bis 5, **dadurch gekennzeichnet, dass** der thermoplastische Polyester der Basisschicht (B) Einheiten aus Ethylenglykol und Terephthalsäure und/oder Einheiten aus Ethylenglykol und Naphthalin-2,6-dicarbonsäure aufweist.

7. Polyesterfolie nach einem oder mehreren der Ansprüche 1 bis 6, **dadurch gekennzeichnet, dass** der thermoplastische Polyester der Basisschicht (B) Polyethylenterephthalat ist.

8. Polyesterfolie nach einem oder mehreren der Ansprüche 1 bis 7, **dadurch gekennzeichnet, dass** der thermoplastische Polyester der Basisschicht (B) und der thermoplastische Polyester der Deckschicht (A) identisch sind.

9. Polyesterfolie nach einem oder mehreren der Ansprüche 1 bis 8, **dadurch gekennzeichnet, dass** die Polyesterfolie einen ABC-Schichtaufbau hat, wobei die Deckschichten (A) und (C) gleich oder verschieden sind.

10. Polyesterfolie nach einem oder mehreren der Ansprüche 1 bis 9, **dadurch gekennzeichnet, dass** die Polyesterfolie einen ABA-Schichtaufbau hat.

11. Polyesterfolie nach einem oder mehreren der Ansprüche 1 bis 10, **dadurch gekennzeichnet, dass** die Deckschicht (A) der Folie eine mittlere Rauigkeit von 40 bis 150 nm aufweist.

12. Polyesterfolie nach einem oder mehreren der Ansprüche 1 bis 11, **dadurch gekennzeichnet, dass** der Reibungswert der Deckschicht (A) gegen die Deckschicht (A) kleiner/gleich 0,4 ist.

13. Polyesterfolie nach einem oder mehreren der Ansprüche 1 bis 12, **dadurch gekennzeichnet, dass** der Weißgrad der Folie nach Berger größer als 70 ist.

14. Verfahren zur Herstellung einer Polyesterfolie nach einem oder mehreren der Ansprüche 1 bis 13 umfassend die Schritte

   a) Herstellen einer mehrschichtigen Folie durch Coextrusion,
   b) biaxiales Strecken der Folie und
   c) Thermofixieren der gestreckten Folie.

15. Verwendung einer Polyesterfolie nach einem oder mehreren der Ansprüche 1 bis 13 als Verpackungsmaterial für Nahrungs- und Genussmittel, als Etikett, als photographischer Schichtträger oder in der Medizintechnik.

**Claims**

1. A white, biaxially oriented polyester film, which has a base layer (B) and has at least one outer layer (A), where

   a) the base layer (B) comprises, as sole whitening pigment, a concentration of from 5 to 25 % by weight of barium sulfate, and
   b) the outer layer (A) comprises, as sole whitening pigment, a concentration of from 5 to 25 % by weight of barium sulfate, and also comprises from 0.01 to 4 % by weight of antiblocking agent whose median diameter ($d_{50}$ value) is from 2 to 8 $\mu$m.

2. The polyester film as claimed in claim 1, wherein the whitening pigment is a precipitated barium sulfate.

3. The polyester film as claimed in claim 1 or 2, wherein the whitening pigment in the base layer (B) and in the outer layer (A) is precipitated barium sulfate.

4. The polyester film as claimed in one or more of claims 1 to 3, wherein the antiblocking agent is silicon dioxide.

5. The polyester film as claimed in one or more of claims 1 to 4, wherein the base layer (B) is composed of at least 80 % by weight of a thermoplastic polyester.

6. The polyester film as claimed in one or more of claims 1 to 5, wherein the thermoplastic polyester of the base layer (B) has units composed of ethylene glycol and terephthalic acid and/or units composed of ethylene glycol and naphthalene-2,6-dicarboxylic acid.

7. The polyester film as claimed in one or more of claims 1 to 6, wherein the thermoplastic polyester of the base layer (B) is polyethylene terephthalate.

8. The polyester film as claimed in one or more of claims 1 to 7, wherein the thermoplastic polyester of the base layer (B) and the thermoplastic polyester of the outer layer (A) are identical.

9. The polyester film as claimed in one or more of claims 1 to 8, which has an ABC layer structure, where the outer layers (A) and (C) are identical or different.

10. The polyester film as claimed in one or more of claims 1 to 9, which has an ABA layer structure.

11. The polyester film as claimed in one or more of claims 1 to 10, wherein the average roughness of the outer layer (A) is from 40 to 150 nm.

12. The polyester film as claimed in one or more of claims 1 to 11, wherein the coefficient of friction of the outer layer (A) with respect to the outer layer (A) is smaller than or equal to 0.4.

13. The polyester film as claimed in one or more of claims 1 to 12, whose Berger whiteness is greater than 70.

14. A process for production of a polyester film as claimed in one or more of claims 1 to 13, encompassing the steps of

   a) production of a multilayer film via coextrusion,
   b) biaxial stretching of the film, and
   c) heat-setting of the stretched film.

15. The use of a polyester film as claimed in one or more of claims 1 to 13 as packaging material for foods and other consumable items, as label, or as photographic layer substrate, or in medical technology.

**Revendications**

1. Film de polyester blanc, orienté de façon bi-axiale, qui présente une couche de base (B) et au moins une couche de recouvrement (A),

a) la couche de base (B) contenant comme unique pigment azurant du sulfate de baryum dans une concentration de 5 à 25 % en poids et

b) la couche de recouvrement (A) contenant comme unique pigment azurant du sulfate de baryum dans une concentration de 5 à 25 % en poids et en supplément 0,01 à 4 % en poids d'un antibloquant avec un diamètre moyen (valeur $d_{50}$) de 2 à 8 $\mu$m.

2. Film de polyester selon la revendication 1, **caractérisé en ce que** le pigment azurant est un sulfate de baryum précipité.

3. Film de polyester selon la revendication 1 ou 2, **caractérisé en ce que** le pigment azurant est du sulfate de baryum précipité dans la couche de base (B) et dans la couche de recouvrement (A).

4. Film de polyester selon l'une quelconque ou plusieurs des revendications 1 à 3, **caractérisé en ce que** l'agent antibloquant est du dioxyde de silicium.

5. Film de polyester selon l'une quelconque ou plusieurs des revendications 1 à 4, **caractérisé en ce que** la couche de base (B) se compose d'un polyester thermoplastique pour au moins 80 % en poids.

6. Film de polyester selon l'une quelconque ou plusieurs des revendications 1 à 5, **caractérisé en ce que** le polyester thermoplastique de la couche de base (B) présente des unités constituées d'éthylène glycol et d'acide téréphtalique et/ou d'unités d'éthylène glycol et de naphtaline-2,6-acide dicarbonique.

7. Film de polyester selon l'une quelconque ou plusieurs des revendications 1 à 6, **caractérisé en ce que** le polyester thermoplastique de la couche de base (B) est du polyéthylène téréphtalate.

8. Film de polyester selon l'une quelconque ou plusieurs des revendications 1 à 7, **caractérisé en ce que** le polyester thermoplastique de la couche de base (B) et le polyester thermoplastique de la couche de base (A) sont identiques.

9. Film de polyester selon l'une quelconque ou plusieurs des revendications 1 à 8, **caractérisé en ce que** le film de polyester a une structure de couche ABC, les couches de recouvrement (A) et (C) étant identiques ou différentes.

10. Film de polyester selon l'une quelconque ou plusieurs des revendications 1 à 9, **caractérisé en ce que** le film de polyester a une structure de couche ABA.

11. Film de polyester selon l'une quelconque ou plusieurs des revendications 1 à 10, **caractérisé en ce que** la couche de recouvrement (A) du film présente une rugosité moyenne de 40 à 150 nm.

12. Film de polyester selon l'une quelconque ou plusieurs des revendications 1 à 11, **caractérisé en ce que** le coefficient de friction de la couche de recouvrement (A) contre la couche de recouvrement (A) est inférieur ou égal à 0,4.

13. Film de polyester selon l'une quelconque ou plusieurs des revendications 1 à 12, **caractérisé en ce que** le degré de blanc du film selon Berger est supérieur à 70.

14. Procédé pour la fabrication d'un film de polyester selon l'une quelconque ou plusieurs des revendications 1 à 13, comprenant les étapes suivantes :

   a) fabrication d'un film multicouches par coextrusion,
   b) étirement bi-axial du film et
   c) thermofixation du film étiré.

15. Utilisation d'un film de polyester selon l'une quelconque ou plusieurs des revendications 1 à 13 sous forme de matériau d'emballage pour produits alimentaires et denrées d'agrément, d'étiquette, de support de couche photographique ou dans la technique médicale.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2647713 C2
- EP 1125966 A
- EP 1125967 A

**In der Beschreibung aufgeführte Nicht-Patentliteratur**

- *Kunststoff-Journal,* vol. 8 (10), 30-36
- *KUNSTSTOFF-JOURNAL,* 1974, vol. 11, 36-31
- **HANSL LOOS.** Farbmessung. Verlag Beruf und Schule, 1989